# FASCICULE DE BREVET EUROPEEN

(11) **EP 2 889 194 B1**
(45) Date de publication et mention de la délivrance du brevet: **14.09.2016**
(21) Numéro de dépôt: 13306870.0
(22) Date de dépôt: 26.12.2013
(51) Int. Cl.: B60T 1/00

(54) **Dispositif de verrouillage simple et robuste entre deux éléments aptes à coulisser l'un par rapport à l'autre**
Vorrichtung zur einfachen und robusten Verriegelung zwischen zwei gegeneinander verschiebbaren Elementen
Straightforward, robust locking device between two elements capable of sliding relative to one another

(43) Date de publication de la demande: 01.07.2015
(73) Titulaire: Bontaz Centre R&D, 74460 Marnaz (FR)
(72) Inventeur: Chavanne, Samuel Georges, 74970 Marignier (FR); Chenevard, Benoît, 74000 Annecy (FR)
(74) Mandataire: Ilgart, Jean-Christophe

(56) Documents cités:
- EP-A1- 1 729 026
- EP-A1- 2 154 040
- GB-A- 1 142 997

## Description

### DOMAINE TECHNIQUE ET ÉTAT DE LA TECHNIQUE ANTÉRIEURE

La présente invention se rapporte à un dispositif de verrouillage de conception simple et robuste entre deux éléments aptes à coulisser l'une par rapport à l'autre, et notamment à un dispositif de verrouillage électromécanique.

Dans le domaine automobile, des dispositifs pour assurer des verrouillages temporaires fiables, peu encombrant et d'un coût de revient raisonnable sont recherchés.

Il est souhaitable que ces dispositifs soient intégrés aux systèmes existants afin de limiter l'encombrement général.

Par exemple, les véhicules automobiles à boîte automatique comportent des moyens de pilotage du frein de parking. Le frein de parking est activé par l'intermédiaire d'un vérin hydraulique. Il est souhaitable d'immobiliser le vérin lorsque le véhicule roule afin d'éviter tout risque d'activation du frein de parking de manière intempestive. Cette immobilisation doit être particulièrement sûre et robuste car elle doit fonctionner sur une longueur période et est soumis aux vibrations du véhicule.

Le document EP 2 154 040 A1 décrit un actionneur de frein de parking ou de secours par frein à déverrouillage à billets.

### EXPOSÉ DE L'INVENTION

C'est par conséquent un but de la présente invention d'offrir un dispositif de verrouillage entre deux éléments aptes à coulisser l'un par rapport à l'autre de conception simple et robuste.

Le but précédemment énoncé est atteint par un dispositif de verrouillage entre un premier et un deuxième élément destinés à coulisser l'un par rapport à l'autre, le premier élément étant logé dans le deuxième élément, le dispositif comportant au moins un élément de verrouillage formé par au moins une bille, le dispositif comportant un logement pour la bille formé dans le premier élément ou le deuxième élément et au moins un cavité formée dans le deuxième élément ou le premier élément respectivement, la cavité étant destinée à être en face du logement dans le position relative des premier et deuxième éléments que l'on souhaite verrouiller. Le dispositif comportant également des moyens pour forcer l'élément de verrouillage à se déplacer dans une position dans laquelle elle se trouve en partie dans le logement du premier élément et en partie dans la cavité du deuxième élément, empêchant tout coulissement.

En d'autres termes, le dispositif de verrouillage met en oeuvre au moins une bille destinée à former une butée longitudinale aux déplacements relatifs des deux éléments, en étant reçue en partie dans chacun des éléments.

De manière préférée, les moyens pour forcer l'élément de verrouillage à se déplacer comporte un électroaimant et un élément de blocage en forme de bille en contact avec l'élément de verrouillage.

Les moyens pour forcer l'élément de verrouillage à se déplacer dans une position de verrouillage sont avantageusement disposés dans le premier élément, ainsi le dispositif de verrouillage présente un encombrement limité.

Par exemple, le premier et le deuxième élément forment un vérin hydraulique.

La présente invention porte alors sur un dispositif de verrouillage entre un premier et deuxième élément destinés à coulisser l'un par rapport à l'autre le long d'un axe longitudinal, le premier élément étant disposé dans le deuxième élément, le dispositif de verrouillage comportant au moins un chemin réalisé dans le premier ou le deuxième élément et au moins une cavité réalisée dans le deuxième ou le premier élément respectivement, le chemin débouchant en regard de la cavité dans une position de verrouillage des premier et deuxième élément, au moins une bille étant logée dans le chemin, un actionneur étant apte à forcer la bille à se déplacer dans le chemin de sorte qu'à l'état déverrouillé ladite bille est logée entièrement dans le chemin, le premier et deuxième élément étant libres de coulisser l'un par rapport à l'autre, et à l'état verrouillé, ladite bille est logée en partie dans le chemin et en partie dans la cavité empêchant le coulissement relatif du premier et du deuxième élément, la bille étant maintenue dans cette position tant que l'actionneur est activé.

Dans un exemple de réalisation, le premier élément est au moins en partie creux et comporte au moins un chemin s'étendant d'une zone intérieure du premier élément et débouchant dans une surface latérale extérieure du premier élément, et le deuxième élément comporte au moins une cavité dans sa surface intérieure, ladite surface latérale intérieure entourant la surface latérale extérieure. Au moins une bille est logée dans le chemin et un actionneur est apte à forcer la bille à se déplacer dans le chemin vers l'extérieur du premier élément de sorte qu'à l'état déverrouillé ladite bille est logée entièrement dans le chemin, le premier et deuxième élément étant libres de coulisser l'un par rapport à l'autre, et à l'état verrouillé, ladite bille est logée en partie dans le chemin et en partie dans la cavité du deuxième élément empêchant le coulissement relatif du premier et du deuxième élément, ladite bille étant maintenue dans cette position tant que l'actionneur est activé.

De préférence, le dispositif de verrouillage comporte plusieurs chemins répartis régulièrement autour de l'axe longitudinal et le deuxième élément comporte une gorge annulaire.

Le premier et le deuxième élément présentent de préférence des formes de révolution autour de l'axe longitudinal et dans lequel le ou les chemins s'étendent radialement.

Le dispositif de verrouillage peut comporter plusieurs billes dans le ou les chemins.

Selon une caractéristique additionnelle, le deuxième élément comporte au moins deux cavités dans sa surface intérieur, lesdites cavités étant situées l'une par rapport à l'autre dans deux positions longitudinales différentes de sorte à permettre un verrouillage du premier et deuxième élément dans deux positions relatives différentes.

Avantageusement, l'actionneur est logé dans le premier élément.

L'actionneur peut par exemple comporter un électroaimant et au moins un élément de blocage apte à être déplacé longitudinalement par l'électroaimant, l'élément de blocage étant en contact avec la ou les billes.

L'élément de blocage peut être de forme conique ou de forme sphérique.

La présente invention a également pour objet un vérin hydraulique comportant un corps de vérin et un piston, et un dispositif de verrouillage selon l'invention, le corps de vérin formant le premier élément et le piston formant le deuxième élément.

La présente invention a également pour objet un système d'actionnement d'un frein de parking de boîtes de vitesses automatique comportant un vérin hydraulique selon l'invention.

### BRÈVE DESCRIPTION DES DESSINS

La présente invention sera mieux comprise sur la base de la description qui va suivre et des dessins en annexe sur lesquels:
- la figure 1A est une vue en coupe longitudinale d'un exemple de réalisation d'un dispositif de verrouillage selon l'invention appliqué à un vérin hydraulique dans une première position dans un état déverrouillée,
- la figure 1B est une vue en coupe transversale du dispositif de la figure 1A le long du plan A-A,
- la figure 2A est une vue en coupe longitudinale du dispositif de verrouillage de la figure 1A dans une première position dans un état verrouillé,
- la figure 2B est une vue en coupe transversale du dispositif de la figure 2A le long du plan A-A,
- la figure 3A est une vue en coupe longitudinale du dispositif de verrouillage de la figure 1A dans une deuxième position dans un état déverrouillé,
- la figure 3B est une vue en coupe transversale du dispositif de la figure 3A le long du plan A-A,
- la figure 4A est une vue en coupe longitudinale du dispositif de verrouillage de la figure 1A dans une deuxième position dans un état verrouillé,
- la figure 4B est une vue en coupe transversale du dispositif de la figure 4A le long du plan A-A.

### EXPOSÉ DÉTAILLÉ DE MODES DE RÉALISATION PARTICULIERS

Dans la description qui va suivre, les termes "haut" et "bas" correspondent aux représentations sur les figures et ne sont pas limitatifs de l'orientation des différents éléments.

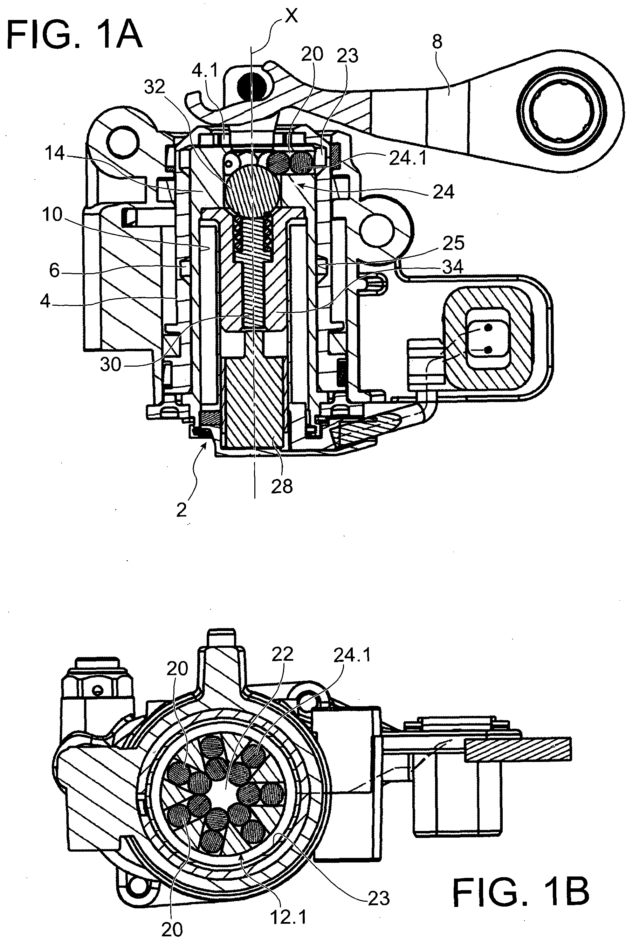

Sur les figures 1A à 4B est représenté un exemple d'un dispositif de verrouillage selon l'invention appliqué à un vérin hydraulique. Il sera cependant compris que l'invention s'applique au verrouillage de tout ensemble d'au moins deux éléments aptes à coulisser l'un par rapport à l'autre.

Le vérin hydraulique comporte un corps de vérin 2 et un piston 4 monté coulissant autour du corps du vérin 2 le long d'un axe X. Un joint 6 est prévu dans la face interne du piston 4 pour assurer un coulissement étanche. L'alimentation en fluide n'est pas représentée.

Dans l'exemple représenté, le vérin est destiné à actionner un frein de parking de boîte de vitesse automatique d'un véhicule automobile. Pour cela, le nez 4.1 du piston est relié à un levier 8 agissant sur le système de frein de parking (non représenté).

Le vérin comporte un dispositif de verrouillage destiné à verrouiller le piston 4 et le corps de vérin 2 l'un par rapport à l'autre le long de l'axe longitudinal X.

Le dispositif de verrouillage est monté dans le corps de vérin 2. Pour cela le corps de vérin est creux, un espace intérieur 10 est délimité entre une paroi latérale 12 et un fond 14 du corps de vérin 2.

Le diamètre extérieur de la paroi latérale 12 est ajusté avec le diamètre intérieur de la chemise 18 du piston 4.

Dans l'exemple représenté, le fond 14 du corps de vérin 2 comporte des chemins 20 s'étendant radialement à partir d'un logement 22 réalisé dans le fond 14 et débouchant dans la surface extérieure 12.1 de la paroi latérale 12, du corps de vérin 2. Les chemins 20 sont répartis de préférence régulièrement autour de l'axe X assurant, comme nous le verrons par la suite, un verrouillage équilibré. Les chemins sont par exemple usinés dans le corps de vérin.

Dans l'exemple représenté, le piston 4 comporte dans sa surface intérieure deux gorges annulaires 23, 25 d'axe X et décalées longitudinalement. Les gorges sont par exemple usinées dans la surface intérieure du piston.

Le dispositif de verrouillage comporte également au moins un élément de verrouillage en forme de bille (24) logé dans chaque chemin 20 et apte se déplacer le long de son chemin. Dans l'exemple représenté, plusieurs billes sont disposées dans chaque chemin 20, la bille la plus extérieure assurant le verrouillage et les autres billes transmettant le mouvement à la bille la plus extérieure et la maintenant en position. Le nombre de bille est choisi en fonction de la taille des éléments à immobiliser et de la place disponible.

Le dispositif de verrouillage comporte un actionneur apte à forcer les billes 24 à se déplacer dans les chemins 20 vers l'extérieur du corps de vérin 2 de sorte que la bille la plus extérieure de chaque chemin 20 se trouve en partie dans son chemin 20 et en partie dans la cavité 23 ou 25 lorsque le dispositif est dans un état verrouillé.

L'actionneur dans l'exemple représenté et de manière avantageuse, est une électroaimant. Celui-ci comporte un noyau mobile 28 logé dans le corps de vérin et déplacé axialement par activation de l'électroaimant, un élément mobile 30 déplacé par le noyau mobile 28, un élément de blocage 32 des billes 24 apte à être déplacé par l'élément mobile 30. L'élément mobile 30 est dans l'exemple représenté monté dans un manchon 34 monté dans le corps de vérin et assurant son guidage.

Dans l'exemple représenté et de manière très avantageuse, l'élément de blocage 32 est formé par une bille. En variante il pourrait s'agir d'une pièce de forme conique de conicité orientée vers le nez du vérin. La pièce de forme conique pourrait comporter plusieurs pentes se succédant longitudinalement. En variante encore, l'élément de blocage pourrait être formé par une pièce de révolution dont le profil est une courbe assurant l'écartement des billes lorsqu'elle est déplacée vers le fond du corps de vérin.

De préférence, la bille 32 et les billes 24 sont dans le même matériau, par exemple en acier 100C6 traité, elles offrent donc toutes la même résistance mécanique, assurant alors une usure du système équilibrée.

Avantageusement un moyen élastique est interposé entre l'élément mobile 30 et l'élément de blocage 32. Celui-ci permet d'avoir une meilleure réactivité au déverrouillage du système en décollant le noyau mobile 28 du collage magnétique via l'élément mobile 30. Dans l'exemple représenté, le moyen élastique est un ressort hélicoïdal.

L'électroaimant est relié par des fils de connexion à une source de courant commandée.

De manière avantageuse, la dimension transversale du logement 22 correspond sensiblement au diamètre de la bille 32 assurant ainsi son guidage le long de l'axe X.

Les chemins 20 peuvent être légèrement inclinés vers l'axe longitudinal X facilitant le retour des billes 24 en position déverrouillée.

En outre, la forme des gorges 23, 25 est avantageusement telle que les gorges repoussent la bille la plus extérieure vers l'axe longitudinal X lorsque le piston 4 se déplace par rapport au corps de vérin 2.

Le fonctionnement du dispositif de verrouillage va maintenant être décrit.

Sur les figures 1A et 1B, aucune pression n'est appliquée sur le piston 4, le piston 4 est en position basse dans la représentation des figures. L'électroaimant est désactivé, le noyau mobile 28 et l'élément mobile 30 sont au repos en position basse, toutes les billes 24 sont logées uniquement dans les chemins 20 (figure 1B). Dans cette position, les chemins 20 débouchent en face de la gorge annulaire 23

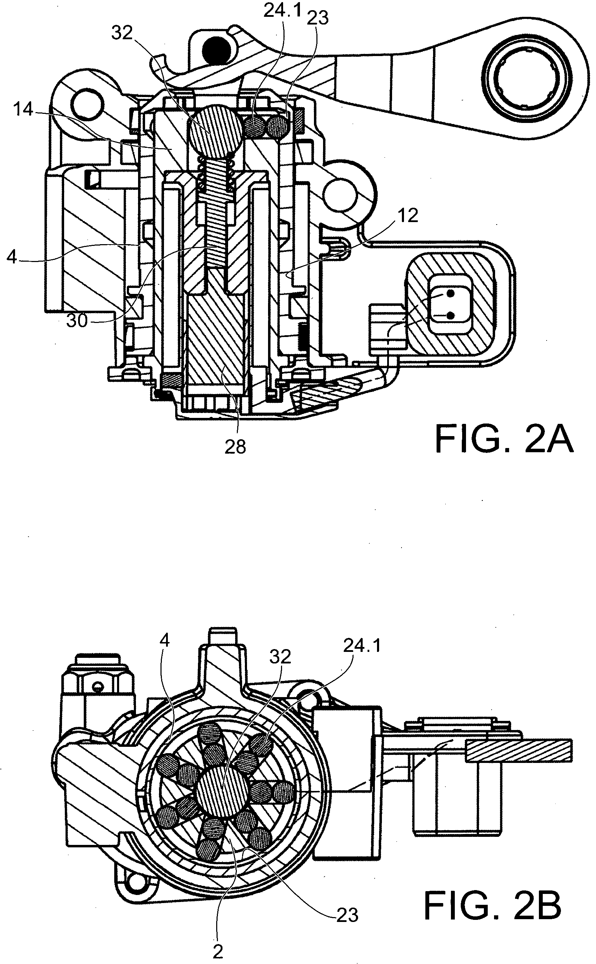

Lorsque l'électroaimant est activé dans cette position relative du piston 4 et du corps de vérin 2, le noyau mobile 28 et l'élément mobile 30 se déplacent le long de l'axe X en direction du nez de piston 4.1, entraînant l'élément de blocage 32, celui-ci se place entre les trains de billes et repousse alors chaque train de billes 24 radialement vers l'extérieur dans les chemins 20, comme on peut le voir sur la figure 2B. La bille la plus à l'extérieur 24.1 de chaque chemin fait alors saillie de la surface extérieure 12.1 de la paroi latérale du corps de vérin 2 et pénètre en partie dans la gorge annulaire 23 ménagée dans le piston. La bille la plus à l'extérieur 24.1 de chaque chemin se trouve alors en partie dans la gorge annulaire 23 et en partie dans le chemin 20. Tant que l'élément de blocage 32 est maintenu en position haute par l'élément mobile 30, i.e. tant que l'électroaimant est activé, les trains de billes sont immobilisés et la bille la plus à l'extérieur 24.1 de chaque chemin est maintenue bloquée en partie dans la cavité annulaire et dans le chemin et le piston est verrouillé axialement par rapport au corps de vérin (figure 2A et 2B).

Si l'électroaimant est désactivé, le noyau mobile 28 et l'élément mobile 30 reprennent leur position repos, ainsi que l'élément de blocage 32, chaque train de billes est alors libre de circuler dans son chemin 20. Lors que le vérin est actionné, le piston 4 sous l'effet de la pression du fluide se déplace le long de l'axe X, ce qui repousse la bille la plus à l'extérieur 24.1 de chaque chemin à l'intérieur de son chemin, ce qui repousse les billes dans les chemins en direction de l'axe longitudinal. En outre, la forme de la gorge annulaire 23 facilite le retour de la bille la plus à l'extérieur 24.1 de chaque train de billes dans son chemin 20.

La réversibilité du dispositif de verrouillage est assuré par la forme des gorges 23, 25, des chemins 20 et par la mise en oeuvre de billes 24.

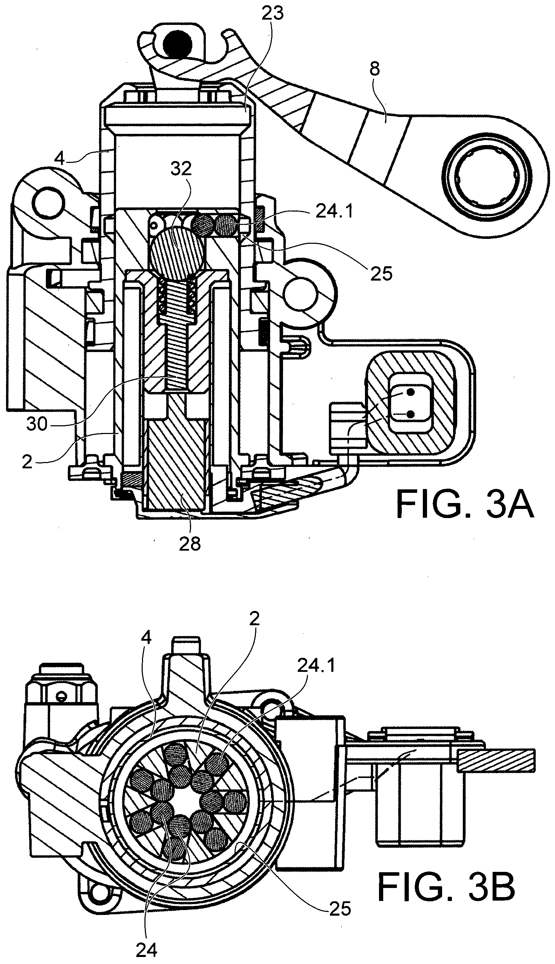

Sur la figure 3A, le piston est en position haute, le vérin est alimenté en fluide, mais il est déverrouillé dans cette position, la bille la plus à l'extérieur 24.1 de chaque chemin est entièrement dans son chemin (figure 3B).

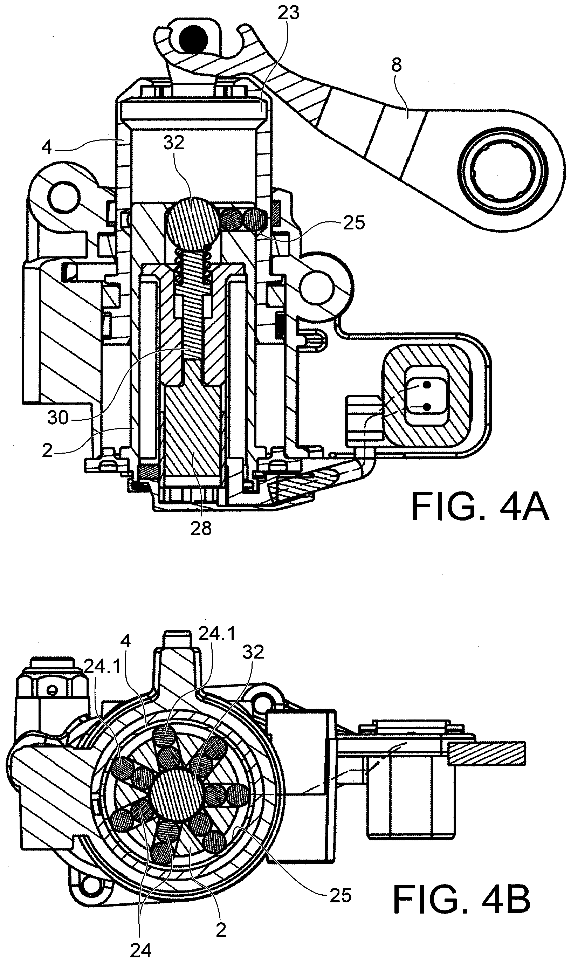

Sur la figure 4A, le piston est verrouillé, l'électroaimant a été activé, déplaçant, l'élément mobile 30 et l'élément de blocage 32 en direction du nez du piston 4.1 via le noyau mobile 28, celui-ci se place entre les trains de billes et force les trains de billes à se déplacer vers l'extérieur, comme cela est visible sur la figure 4B. La bille la plus à l'extérieur 24.1 de chaque chemin se trouve alors en partie dans son chemin 20 et dans la deuxième gorge annulaire 25. Le piston 4 est alors verrouillé dans cette deuxième position et ceci tant que l'électroaimant est activé. Le déverrouillage se fait comme précédemment.

Dans l'exemple représenté, la bille la plus à l'extérieur 24.1 de chaque chemin pénètre dans une gorge commune 23, 25 à toutes les billes les plus à l'extérieur 24.1. En variante, on pourrait envisager que des cavités distinctes soient réalisées pour chaque bille la plus à l'extérieur, cette variante requiert néanmoins d'aligner les chemins et les cavités lors de l'assemblage, ce qu'évite avantageusement la réalisation d'une seule gorge annulaire.

Dans l'exemple représenté, le piston peut être verrouillé dans deux positions longitudinales extrêmes basse et haut mais on pourrait envisager qu'il n'y ait qu'une position de verrouillage ou plus de deux positions de verrouillage, par exemple une position de verrouillage basse et/ou une position de verrouillage haute, et/ou une ou plusieurs positions de verrouillage intermédiaires.

L'exemple représenté porte sur le verrouillage de deux éléments présentant une forme de révolution, mais on peut envisager des éléments ayant des sections ellipsoïdale ou polygonale.

En variante, un dispositif dans lequel les chemins sont réalisés dans le deuxième élément et les cavités sont réalisées dans le premier élément ne sort pas du cadre de la présente invention.

En variante, la bille 32 et son actionnement axial pourraient être remplacés par une came ayant un mouvement de rotation autour de l'axe X, l'actionneur magnétique serait alors adapté.

En variante, l'électroaimant serait remplacé par un actionneur hydraulique ou pneumatique pour déplacer l'élément mobile.

Il pourrait être envisagé par exemple un actionneur qui ne nécessite pas une alimentation permanente pour assurer le blocage, pour cela des aimants permanents pourraient être intégrés pour garantir le maintien en position

La mise en oeuvre d'un élément de blocage 32 en forme de bille présente l'avantage d'éviter tout risque de coincement par arc-boutement ce qui pourrait éventuellement arrivé lorsque l'élément de verrouillage a la forme d'un cône.

En outre, la bille 32 se centre naturellement entre les billes 24 des trains de billes.

De plus, au début du déplacement de la bille, les trains de billes ont un grand déplacement avec un effort réduit et en fin de déplacement, les trains de billes ont un déplacement faible avec un effort important. En début de déplacement, afin d'assurer un verrouillage rapide, on souhaite que les billes latérales se déplacent le plus vite possible dans les gorges de verrouillage. Ce déplacement ne nécessite pas d'effort particulièrement élevé sur les billes, elles sont libres en translation. Au début du déplacement du noyau mobile 28, il ne peut fournir un effort élevé. En fin de déplacement on souhaite que les billes verrouillent avec une force maximale. Le noya mobile 28 fournit en fin de déplacement un effort maximal.

La forme sphérique de l'élément de verrouillage permet un effort de verrouillage élevé, par exemple supérieur à celui d'un cône à 30°.

Par ailleurs, l'état de surface d'une bille est en général meilleur que celui d'une pièce conique, on réduit ainsi les risques de coincement par grippage. De plus, le prix de revient de réalisation d'une bille est inférieur à celui de réalisation d'un cône.

Le dispositif de verrouillage présente l'avantage d'être intégré dans le corps du vérin, il n'augmente donc pas l'encombrement du vérin.

Dans l'exemple représenté, plusieurs billes 24 assurent le verrouillage en périphérie du corps de vérin 2. Un dispositif de verrouillage ne comportant qu'une seule bille ne sort pas du cadre de la présente invention.

Ce dispositif de verrouillage peut être mis en oeuvre dans un vérin hydraulique utilisé pour activer un frein de parking d'un véhicule automobile à boîte de vitesses automatique. Ce dispositif permet de verrouiller le vérin en position basse pendant que le véhicule roule, évitant un actionnement intempestif du frein de parking pendant le roulage du véhicule. Le véhicule étant en train de rouler, la consommation électrique n'est pas problématique, la batterie étant rechargée simultanément. Il permet également de verrouiller le vérin en position haute lors que le frein de parking est activé. Le verrouillage du système s'applique au frein de parking de la boite de vitesse. Le dispositif de verrouillage n'agit pas sur le frein des roues directement mais sur la boîte de vitesse qui une fois verrouillée évite que le véhicule ne bouge. Ainsi, ce verrouillage est activé lorsque le véhicule fonctionne (moteur en marche) aux moments des arrêts à des feux rouges, stops etc.

En variante, il pourrait être envisagée que l'alimentation de l'électroaimant provoque le déverrouillage et l'absence d'alimentation provoque le verrouillage. Cette variante peut par exemple être utilisée dans un application à un frein de parking,

Il sera compris que le dispositif de verrouillage peut s'appliquer de la même manière aux pistons pneumatiques et aux pistons électriques. En autre, il peut s'appliquer à tous les ensembles dans lesquels deux éléments sont mobiles l'un par rapport à l'autre.

## Revendications

1. Dispositif de verrouillage entre un premier (2) et deuxième (4) élément destinés à coulisser l'un par rapport à l'autre le long d'un axe longitudinal (X), le premier élément (2) étant disposé dans le deuxième élément (4), le premier élément (2) étant au moins en partie creux et le deuxième élément (4) comportant au moins une cavité (23, 25) dans sa surface latérale intérieure,
**caractérisé en ce que** le premier élément (2) comporte au moins un chemin (20) s'étendant d'une zone intérieure du premier élément (2) et débouchant dans une surface latérale extérieure (12.1) du premier élément (2), la surface latérale intérieure du deuxième élément (4) entourant la surface latérale extérieure (12.1) du premier élément (1), au moins une bille (24) étant logée dans le chemin (20), un actionneur étant apte à forcer la bille (24) à se déplacer dans le chemin (20) vers l'extérieur du premier élément (2) de sorte qu'à l'état déverrouillé ladite bille (24) est logé entièrement dans le chemin (20), le premier (2) et deuxième (4) élément étant libres de coulisser l'un par rapport à l'autre, et à l'état verrouillé, ladite bille (24) est logée en partie dans le chemin (20) et en partie dans la cavité (23, 25) du deuxième élément (4) empêchant le coulissement relatif du premier (2) et du deuxième (4) élément, ladite bille (24) étant maintenue dans cette position tant que l'actionneur est activé.

2. Dispositif de verrouillage selon la revendication 1, comportant plusieurs chemins (20) répartis régulièrement autour de l'axe longitudinal (X) et le deuxième élément (4) comporte une gorge annulaire (23, 25).

3. Dispositif de verrouillage selon la revendication 1 ou 2, dans lequel le premier (2) et le deuxième (4) élément présentent des formes de révolution autour de l'axe longitudinal (X) et dans lequel le ou les chemins s'étendent radialement.

4. Dispositif de verrouillage selon la revendication 1, 2 ou 3, comportant plusieurs billes (24) dans le ou les chemins (20).

5. Dispositif de verrouillage selon l'une des revendications 1 à 4, dans lequel le deuxième élément (4) comporte au moins deux cavités (23, 25) dans sa surface intérieure, lesdites cavités (23, 25) étant situées l'une par rapport à l'autre dans deux positions longitudinales différentes de sorte à permettre un verrouillage du premier (2) et deuxième (4) élément dans deux positions relatives différentes.

6. Dispositif de verrouillage selon l'une des revendications 1 à 5, dans lequel l'actionneur est logé dans le premier élément (2),

7. Dispositif de verrouillage selon l'une des revendications 1 à 6, dans lequel l'actionneur comporte un électroaimant et au moins un élément de blocage (32) apte à être déplacé longitudinalement par l'électroaimant, l'élément de blocage (32) étant en contact avec la ou les billes.

8. Dispositif de verrouillage selon la revendication 7, dans lequel l'élément de blocage est de forme conique.

9. Dispositif de verrouillage selon la revendication 7, dans lequel l'élément de blocage (32) a une forme sphérique.

10. Vérin hydraulique comportant un corps de vérin et un piston, et un dispositif de verrouillage selon l'une des revendications 1 à 9, le corps de vérin formant le premier élément et le piston formant le deuxième élément.

11. Système d'actionnement d'un frein de parking de boîtes de vitesses automatique comportant un vérin hydraulique selon la revendication 10.

## Patentansprüche

1. Vorrichtung zur Verriegelung zwischen einem ersten (2) und einem zweiten (4) Element, die dazu ausgelegt sind, relativ zueinander entlang einer Längsachse (X) zu gleiten, wobei das erste Element (2) in dem zweiten Element (4) angeordnet ist, wobei das erste Element (2) wenigstens teilweise hohl ist und wobei das zweite Element (4) wenigstens einen Hohlraum (23, 25) an seiner Innenoberfläche umfasst,**dadurch gekennzeichnet, dass** das erste Element (2) wenigstens einen Weg (20) umfasst, der sich von einer Innenzone des ersten Elements (2) aus erstreckt und an einer seitlichen Außenoberfläche (12.1) des ersten Elements (2) mündet, wobei die seitliche Innenoberfläche des zweiten Elements (4) die seitliche Außenoberfläche (12.1) des ersten Elements (2) umgibt, wobei wenigstens eine Kugel (24) in dem Weg (20) angeordnet ist, ein Betätigungselement, das dazu ausgelegt ist, die Kugel (24) zu einer Verlagerung in dem Weg (20) zur Außenseite des ersten Elements (2) hin derart zu zwingen, dass im entriegelten Zustand die Kugel (24) vollständig in dem Weg (20) aufgenommen ist, wobei das erste (2) und das zweite (4) Element relativ zueinander frei gleiten können, und im verriegelten Zustand die Kugel (24) teilweise in dem Weg (20) und teilweise in dem Hohlraum (23, 25) des zweiten Elements (4) aufgenommen ist, wodurch ein Gleiten des ersten (2) und des zweiten (4) Elements relativ zueinander verhindert wird, wobei die Kugel (24) in dieser Position gehalten wird, solange das Betätigungselement aktiviert ist.

2. Vorrichtung zur Verriegelung nach Anspruch 1, umfassend mehrere Wege (20), die gleichmäßig um die Längsachse (X) herum verteilt sind, und wobei das zweite Element (4) eine ringförmige Kehle (23, 25) umfasst.

3. Vorrichtung zur Verriegelung nach Anspruch 1 oder 2, wobei das erste (2) und das zweite (4) Element Rotationsformen um die Längsachse (X) herum aufweisen, und wobei der Weg oder die Wege sich radial erstrecken.

4. Vorrichtung zur Verriegelung nach Anspruch 1, 2 oder 3, umfassend mehrere Kugeln (24) in dem Weg oder den Wegen (20).

5. Vorrichtung zur Verriegelung nach einem der Ansprüche 1 bis 4, wobei das zweite Element (4) wenigstens zwei Hohlräume (23, 25) an seiner Innenoberfläche umfasst, wobei die Hohlräume (23, 25) relativ zueinander an zwei verschiedenen Längspositionen derart angeordnet sind, dass eine Verriegelung des ersten (2) und des zweiten (4) Elements in zwei verschiedenen Relativpositionen ermöglicht wird.

6. Vorrichtung zur Verriegelung nach einem der Ansprüche 1 bis 5, wobei das Betätigungselement in dem ersten Element (2) aufgenommen ist.

7. Vorrichtung zur Verriegelung nach einem der Ansprüche 1 bis 6, wobei das Betätigungselement einen Elektromagneten und wenigstens ein Sperrelement (32) umfasst, das dazu ausgelegt ist, longitudinal durch den Elektromagneten verlagert zu werden, wobei das Sperrelement (32) in Kontakt mit der Kugel oder den Kugeln ist.

8. Vorrichtung zur Verriegelung nach Anspruch 7, wobei das Sperrelement eine konische Form aufweist.

9. Vorrichtung zur Verriegelung nach Anspruch 7, wobei das Sperrelement (32) eine Kugelform aufweist.

10. Hydraulischer Zylinder, umfassend einen Zylinderkörper und einen Kolben, sowie eine Vorrichtung zur Verriegelung nach einem der Ansprüche 1 bis 9, wobei der Zylinderkörper das erste Element und der Kolben das zweite Element bildet.

11. System zur Betätigung einer Parkbremse von Automatikgetrieben, umfassend einen hydraulischen Zylinder nach Anspruch 10.

## Claims

1. Locking device between a first (2) and second (4) element intended to slide relative to one another along a longitudinal axis (X), the first element (2) being arranged in the second element (4), the first element (2) being at least partially hollow and the second element (4) comprising at least one cavity (23, 25) in the internal surface thereof, **characterized in that** the first element (2) comprises at least one track (20) extending from an internal zone of the first element (2) and opening into an external lateral surface (12.1) of the first element (2), the internal lateral surface of the second element (4) surrounding the external lateral surface (12.1) of the first element, at least one ball (24) being housed in the track (20), an actuator being suitable for forcing the ball (24) to move in the track (20) towards the outside of the first element (2) such that, in the unlocked state, said ball (24) is housed entirely in the track (20), the first (2) and second (4) element being free to slide relative to one another, and, in the locked state, said ball (24) is housed partially in the track (20) and partially in the cavity (23, 25) of the second element (4) preventing the relative sliding of the first (2) and second (4) element, said ball (24) being held in this position while the actuator is activated.

2. Locking device according to claim 1, comprising a plurality of tracks (20) distributed regularly about the longitudinal axis (X) and the second element (4) comprises an annular groove (23, 25).

3. Locking device according to claim 1 or 2, wherein the first (2) and the second element (4) element have revolving shapes about the longitudinal axis (X) and wherein the track(s) extend(s) radially.

4. Locking device according to claim 1, 2 or 3, comprising a plurality of balls (24) in the tracks (20).

5. Locking device according to any one of claims 1 to 4, wherein the second element (4) comprises at least two cavities (23, 25) in the internal surface thereof, said cavities (23, 25) being situated relative to one another in two different longitudinal positions so as to enable locking of the first (2) and second (4) element in two different relative positions.

6. Locking device according to any one of claims 1 to 5, wherein the actuator is housed in the first element (2).

7. Locking device according to any one of claims 1 to 6, wherein the actuator comprises an electromagnet and at least one locking element (32) suitable for being moved longitudinally by the electromagnet, the locking element (32) being in contact with the ball(s).

8. Locking device according to claim 7, wherein the locking element has a conical shape.

9. Locking device according to claim 7, wherein the locking element (32) has a spherical shape.

10. Hydraulic cylinder comprising a cylinder body and a piston, and a locking device according to any one of claims 1 to 9, the cylinder body forming the first element and the piston forming the second element.

11. System for actuating an automatic gearbox parking brake comprising a hydraulic cylinder according to claim 10.
